# EUROPÄISCHE PATENTSCHRIFT

(11) **EP 2 361 718 B1**
(45) Veröffentlichungstag und Bekanntmachung des Hinweises auf die Patenterteilung: **18.09.2013**
(21) Anmeldenummer: 11154759.2
(22) Anmeldetag: 17.02.2011
(51) Int. Cl.: B23K 31/02

(54) **Führungsvorrichtung mit einer Kamera oder einem Lichtleiter als eine Optikeinrichtung, Prüfvorrichtung mit einer derartigen Führungsvorrichtung und Anordnung zum Untersuchen einer Schweißnaht sowie Verfahren zur optischen Untersuchung der Innenwand eines Rohres**
Guiding device comprising a camera or an optical fiber as an optical system, testing device with same and assembly for investigating a welded seam and method for optical investigation of the interior wall of a pipe
Dispositif de guidage avec une camera ou une fibre optique comme dispositif optique, dispositif de contrôle doté d'un tel dispositif de guidage et agencement de contrôle d'un cordon de soudure ainsi que procédé de contrôle optique de la paroi intérieure d'un tuyau

(30) Priorität: 26.02.2010 DE 102010000567; 26.02.2010 DE 102010000568; 01.06.2010 DE 102010017187
(43) Veröffentlichungstag der Anmeldung: 31.08.2011
(73) Patentinhaber: Kraftanlagen München GmbH, 80339 München (DE)
(72) Erfinder: ROSENFELD, Dirk, 85435, Erding (DE)
(74) Vertreter: Bohnenberger, Johannes

(56) Entgegenhaltungen:
- EP-A1- 2 023 128
- JP-A- 2000 153 356
- US-A- 5 604 532
- US-A- 5 669 547
- US-A1- 2008 264 451
- US-A1- 2009 230 104

## Beschreibung

Die Erfindung betrifft eine Führungsvorrichtung für eine Optikeinrichtung gemäß Patentanspruch 1 bzw. Patentanspruch 10, eine Anordnung zum Untersuchen einer Schweißnaht eines Rohres gemäß Patentanspruch 12, eine Prüfvorrichtung zur Prüfung von Schweißnähten eines Rohres gemäß Patentanspruch 13, ein Verfahren zur optischen Untersuchung der Innenwand eines Rohres gemäß Patentanspruch 14 und ein Verfahren zur optischen Untersuchung der Innenwand eines Rohres gemäß Patentanspruch 15.

Üblicherweise wird die beim Verschweißen von Metallelementen entstehende Schweißnaht nach oder während des Schweißvorganges überprüft. Dabei wird die Schweißnaht nicht nur auf der Außenseite des Rohres, sondern auch auf der Innenseite des Rohres überprüft. Im Gegensatz zur Außenseite, die relativ leicht überprüft werden kann, ist die Überprüfung der Schweißnaht auf der Innenseite des Rohres auf Grund der eingeschränkten Zugänglichkeit deutlich aufwendiger.

Eine bekannte Möglichkeit der Überprüfung einer Schweißnaht auf der Innenseite eines Rohres ist die optische Überprüfung durch eine Optikeinrichtung, die in das Rohr eingeführt wird und senkrecht auf die Schweißnaht blickt.

Die US 2009/0230104 A1, die US 2008/0264451 A1, die JP 2000-153356 A und die EP 2 023 128 A1 zeigen jeweils Vorrichtungen zur Untersuchung der Innenwand von Rohren, bei denen die Untersuchungsblickrichtung jeweils senkrecht, d.h. in einem Winkel von 90°, zur Rohrinnenwand verläuft.

Die Optikeinrichtung muss in dem Rohr entsprechend positioniert werden, so dass die Schweißnaht sich im Blickfeld der Optikeinrichtung befindet. Ein Blick mit der Optikeinrichtung senkrecht auf die Rohrinnenwand und somit senkrecht auf die Schweißnaht lässt jedoch beispielsweise nicht bzw. nur schwer erkennen, ob die Wurzel der Schweißnaht in das Rohr hineinragt oder nicht. Solche Optikeinrichtungen zur Überprüfung der Rohrinnenwand sind darüber hinaus technisch aufwändig und teuer. Zudem erlauben übliche Optikeinrichtungen nur eine Untersuchung der Schweißnaht nach dem Schweißvorgang, da die während des Schweißens auftretenden hohen Temperaturen die Optikeinrichtung beschädigen.

Die US 5,604,532 A beschreibt eine Vorrichtung zur Untersuchung der Innenwand eines Behälters. Die Vorrichtung wird durch die obere Wand des Behälters eingeführt und umfasst eine starre Leitung mit einem flexiblen Leitungsendelement, an dessen Ende wiederum eine Kamera angeordnet ist. Die Blickrichtung der Kamera verläuft in die Richtung, in die das flexible Leitungsendelement zeigt.

Außerdem sind Optikeinrichtungen bekannt die eine Blickrichtung parallel zur Rohrachse bei der Inspektion von Rohren mit kleinem Durchmesser ermöglichen. Diese haben den Nachteil, dass die Kontur der Schweißnaht schlecht einzuschätzen ist.

Der Erfindung liegt die Aufgabe zu Grunde, eine Führungsvorrichtung zur Führung einer Optikeinrichtung in einem Rohr aufzuzeigen, die technisch einfach und kostengünstig ist und eine sichere Untersuchung der Rohrinnenwand selbst und der Ausbildung der Wurzel der Schweißnaht während eines Schweißvorganges erlaubt.

Diese Aufgabe wird durch eine Führungsvorrichtung nach Anspruch 1 bzw. 10, eine Anordnung nach Anspruch 12, eine Prüfvorrichtung nach Anspruch 13, ein Verfahren zur optischen Untersuchung der Innenwand eines Rohres nach Anspruch 14 und ein Verfahren zur optischen Untersuchung der Innenwand eines Rohres nach Anspruch 15 gelöst.

Die Erfindung beruht auf dem Gedanken, eine Führungsvorrichtung mit einer Kamera oder einem Lichtleiter als eine Optikeinrichtung zur Prüfung von Schweißnähten eines Rohres anzugeben, umfassend ein Führungsmittel, das einen als gekrümmtes Rohr ausgebildeten Hohlkörper zur Aufnahme der Optikeinrichtung mit einer ersten Einführungsöffnung zum Einführen der Optikeinrichtung in den Hohlkörper bildet. Die Führungsvorrichtung weist wenigstens ein Abstützmittel zum Abstützen des Hohlkörpers an einer Innenwand des Rohres auf. Im Hohlkörper ist ein Längsspalt ausgebildet, das wenigstens eine Abstützmittel ist derart angepasst und die Optikeinrichtung ist durch das Führungsmittel entlang des Längsspaltes derart geführt, dass der Längsspalt im Gebrauch zur Innenwand des Rohrs hin geöffnet ist und sich entlang der Innenwand des Rohres derart erstreckt, dass ein durch den Längsspalt begrenztes Sichtfeld bzw. die Blickrichtung der Optikeinrichtung im Gebrauch im Wesentlichen tangential zur Innenwand des Rohres verläuft.

Die Möglichkeit, eine Optikeinrichtung durch die Führungsvorrichtung derart in dem Rohr anzuordnen, dass eine Blickrichtung der Optikeinrichtung im Gebrauch im Wesentlichen tangential zur Innenwand des Rohres verläuft, hat den Vorteil, dass die Innenwand des Rohres, insbesondere eine Schweißnaht, technisch einfach und kostengünstig überprüft werden kann. Zudem können durch einen Blick in einer Richtung im Wesentlichen tangential zur Rohrinnenwand, mehr bzw. andere Informationen gewonnen werden als durch einen Blick senkrecht auf die Schweißnaht oder mit Blickrichtung parallel zur Rohrachse. Beispielsweise kann geprüft werden, ob die Wurzel der Schweißnaht in das Rohr hineinragt. Vorteilhaft ist auch, dass die Innenwand des Rohres, insbesondere die Wurzel einer Schweißnaht, nicht nur nach dem Schweißen, sondern auch während des Schweißvorganges sicher beobachtet und untersucht werden kann. Des Weiteren ist vorteilhaft, dass die Schweißparameter während des Schweißvorganges überwacht und entsprechend angepasst werden können. Der Hohlkörper bildet ein gekrümmtes, insbesondere kreisförmiges, Rohr. Dies hat den Vorteil, dass die Optikeinrichtung auf einfache Art und Weise in dem Hohlkörper in Umfangsrichtung des Hohlkörpers, insbesondere in beiden Richtungen, d.h. im Uhrzeigersinn und im Gegenuhrzeigersinn, bewegt werden kann. Vorteilhaft daran ist auch, dass die Führungsvorrichtung einfach in gekrümmten bzw. kreisförmigen Rohren angeordnet werden kann.

Die Erfindung ist besonders für eine drehstarre Anordnung des Hohlkörpers im Rohr geeignet. Zur Änderung der Prüfposition der Optikeinrichtung in Umfangsrichtung ist die Optikeinrichtung relativ zum Hohlkörper bewegbar.

Die Führungsvorrichtung kann ein mit dem Führungsmittel verbundenes Einführungsrohr zum Einführen der Optikeinrichtung in den Hohlkörper durch die erste Einführungsöffnung umfassen. Vorteilhaft hieran ist, dass die Optikeinrichtung auf einfache Art und Weise in die Führungsvorrichtung eingeführt und wieder entfernt werden kann.

Die Führungsvorrichtung kann eine zweite in dem Hohlkörper ausgebildete Einführungsöffnung zum Einführen eines Optikeinrichtungszugseils oder einer Optikeinrichtungszugkette in den Hohlkörper umfassen. Hierdurch ist es möglich, ein Optikeinrichtungszugseil oder einer Optikeinrichtungszugkette auf einfache Art und Weise in den Hohlkörper einzuführen und wieder zu entfernen, sowie mit der Optikeinrichtung zu verbinden, und somit durch Ziehen am Optikeinrichtungszugseil oder an der Optikeinrichtungszugkette die Position der Optikeinrichtung zu verändern.

In einer weiteren Ausführungsform umfasst die Führungsvorrichtung zwei Abstützmittel und der Hohlkörper ist zwischen den beiden Abstützmitteln, insbesondere im Wesentlichen mittig zwischen den beiden Abstützmitteln, angeordnet. Hierdurch wird die Positionsstabilität der Führungsvorrichtung und insbesondere die Positionsstabilität des Hohlkörpers erhöht.

Die Führungsvorrichtung kann mindestens ein mit der Führungsvorrichtung verbindbares Vorrichtungsführungsseil oder eine mit der Führungsvorrichtung verbindbare Vorrichtungsführungskette zum Beibehalten und/oder Verändern der Position der Führungsvorrichtung entlang der Längsachse des Rohres umfassen. Dies hat den Vorteil, dass die Position der Führungsvorrichtung entlang der Längsachse des Rohres auf einfache Art und Weise beibehalten oder verändert werden kann. Durch Verändern der Position der Führungsvorrichtung entlang der Längsachse des Rohres können verschiedene Bereiche der Rohrinnenwand untersucht werden.

In einer weiteren Ausführungsform sind die beiden Abstützmittel und der Hohlkörper derart ausgebildet, dass die Abstützmittel, der Hohlkörper und die Innenwand des Rohres im Gebrauch einen ersten Hohlraum bilden. Der auf einfache Art und Weise gebildete Hohlraum kann als Staukammer für eine Vorwärmung und/oder eine Wärmenachbehandlung dienen. Alternativ oder zusätzlich kann die Führungsvorrichtung zwei mit dem Hohlkörper verbindbare Begrenzungswände umfassen, die in Längsrichtung des Rohres vor und hinter dem Hohlkörper angeordnet und derart ausgebildet sind, dass die Begrenzungswände und das Rohr im Gebrauch einen zweiten Hohlraum (28) bilden. Hierdurch kann ein relativ großer Hohlraum gebildet werden. Der Hohlraum kann als Staukammer für eine Vorwärmung und/oder eine Wärmenachbehandlung dienen.

Der Hohlraum kann eine Formierkammer zur Aufnahme eines Formiergases bilden. Hierdurch wird die Rohrinnenwand durch das Formiergas geschützt und eine übermäßige Oxidierung der Rohrinnenwand während des Schweißvorganges verhindert.

Die Führungsvorrichtung kann eine mit Metallwolle oder Metalllegierungswolle, insbesondere Stahlwolle, gefüllte Strömungskammer zum Einleiten des Formiergases umfassen, die mit der Formierkammer fluidverbunden ist. Hierdurch wird das Strömungsverhalten des Formiergases beim Einleiten in die Formierkammer verbessert.

Die Erfindung beruht ferner auf dem Gedanken, eine Führungsvorrichtung zur Führung einer Kamera oder eines Lichtleiters als eine Optikeinrichtung in einem Rohr mit der Kamera oder dem Lichtleiter und einem Führungsmittel anzugeben. Das Führungsmittel weist ein gerades Längsteil, das sich im Gebrauch in Axialrichtung des Rohres erstreckt, ein daran anschließendes kreisbogenförmiges Mittelteil und ein daran anschließendes gerades Endteil auf, das sich im Gebrauch in einer Radialrichtung des Rohres erstreckt. Das Endteil weist eine Öffnung auf, die im Gebrauch einer Innenwand des Rohres gegenüber angeordnet ist derart, dass ein Sichtfeld bzw. eine Blickrichtung der Optikeinrichtung im Gebrauch im Wesentlichen tangential zu einer Innenwand des Rohres verläuft. Hierdurch kann auf einfache Art und Weise die Innenwand eines Rohres, insbesondere eine Schweißnaht, technisch einfach und kostengünstig untersucht werden. Zudem besteht die Möglichkeit, durch einen Blick in einer Richtung im Wesentlichen tangential zur Rohrinnenwand mehr bzw. andere Informationen zu gewinnen, als durch einen Blick senkrecht auf die Schweißnaht: Beispielsweise kann geprüft werden, ob die Wurzel der Schweißnaht in das Rohr hineinragt. Zudem ist hieran vorteilhaft, dass die Untersuchung der Innenwand des Rohres, insbesondere der Wurzel der Schweißnaht, nicht nur nach dem Schweißen, sondern auch während eines Schweißvorganges möglich ist.

Die Erfindung ist besonders für eine drehbewegliche Anordnung des Führungsmittels geeignet, um die Prüfposition der Optikeinrichtung in Umfangsrichtung zu verändern.

Die Führungsvorrichtung wird mit der Optikeinrichtung offenbart und beansprucht. Das gilt für die drehstarre und die drehbewegliche Ausbildung des Führungsmittels sowie für alle erfindungsgemäßen Ausführungsbeispiele bzw. Ausführungsformen.

Insbesondere wird die Aufgabe auch durch ein Verfahren zur optischen Untersuchung der Innenwand eines Rohres, insbesondere der Wurzel einer Schweißnaht im Bereich der Innenwand des Rohres, gelöst, wobei eine Kamera oder ein Lichtleiter als eine Optikeinrichtung in ein Führungsmittel, das einen als gekrümmtes Rohr ausgebildeten Hohlkörper zur Aufnahme der Optikeinrichtung bildet, durch eine erste Einführungsöffnung eingeführt wird, das Führungsmittel in einem Rohr angeordnet und durch Abstützmittel gehalten wird derart, dass ein im Hohlkörper ausgebildeter Längsspalt zur Innenwand des Rohres hin geöffnet ist, die Optikeinrichtung im Hohlkörper entlang des Längsspaltes geführt wird derart, dass eine Blickrichtung der Optikeinrichtung durch den Längsspalt im Wesentlichen tangential zur Innenwand des Rohres verläuft, und die Innenwand des Rohres, insbesondere die Schweißnaht, geprüft wird.

Alternativ wird die Aufgabe insbesondere durch ein Verfahren zur optischen Untersuchung der Innenwand eines Rohres, insbesondere der Wurzel einer Schweißnaht im Bereich der Innenwand des Rohres, gelöst, wobei eine Kamera und/oder ein Lichtleiter als eine Optikeinrichtung in ein Führungsmittel eingeführt wird, das einen Hohlkörper zur Aufnahme der Optikeinrichtung bildet mit einem geraden Längsteil, das im Gebrauch in Axialrichtung des Rohres verläuft, einem daran anschließenden kreisbogenförmigen Mittelteil und einem wiederum daran anschließenden geraden Endteil mit einer Öffnung, das sich im Gebrauch in einer Radialrichtung des Rohres erstreckt. Das Führungsmittel wird in einem Rohr angeordnet derart, dass eine Blickrichtung der Optikeinrichtung durch die Öffnung im Wesentlichen tangential zur Innenwand des Rohres verläuft. Dann wird die Innenwand des Rohres, insbesondere die Schweißnaht, geprüft.

Ein wesentlicher Punkt der Erfindung besteht darin, dass bei dem Verfahren die optische Überprüfung im Wesentlichen tangential zur Innenwand des Rohres erfolgt, indem die Blickrichtung der Optikeinrichtung im Gebrauch im Wesentlichen tangential zur Innenwand des Rohres verläuft. Dies hat den Vorteil, dass die Innenwand des Rohres, insbesondere die Schweißnaht, technisch einfach und kostengünstig überprüft werden kann. Zudem werden durch die tangentiale Blickrichtung mehr Informationen gewonnen als durch ein Verfahren, bei dem die Blickrichtung senkrecht zur Rohrinnenwand verläuft. Beispielsweise kann geprüft werden, ob die Wurzel der Schweißnaht in das Rohr hineinragt oder zurückgefallen ist. Vorteilhaft ist auch, dass die Innenwand des Rohres, insbesondere die Wurzel einer Schweißnaht, selbst während des Schweißvorganges sicher beobachtet und untersucht werden kann.

Bei dem Verfahren kann die Blickrichtung der Optikeinrichtung in Umfangsrichtung des Rohres verändert werden. Vorteilhaft hieran ist, dass dadurch verschiedene Bereiche der Rohrinnenwand optisch untersucht werden können.

Die Position des Führungsmittels kann in Längsrichtung des Rohres verändert werden. Hierdurch können verschiedene Bereiche entlang der Längsrichtung des Rohres optisch untersucht werden.

Das Führungsmittel kann auf einen Innendurchmesser des Rohres angepasst werden. Dadurch können Rohre mit verschiedenen Durchmessern auf einfache Art und Weise optisch untersucht werden.

Bei dem Verfahren kann die die Optikeinrichtung gekühlt werden. Hierdurch wird sichergestellt, dass die Optikeinrichtung während eines Schweißvorganges nicht überhitzt. Zudem kann, beispielsweise bei der Verwendung einer CCD-Kamera als Optikeinrichtung, das elektronische Rauschen vermindert werden.

Das von der Optikeinrichtung erfasste Bild kann automatisch analysiert werden, insbesondere zum automatischen Positionieren des Führungsmittels in dem Rohr. Vorteilhaft hieran ist, dass durch eine automatische Analyse die Innenwand des Rohres, insbesondere eine Schweißnaht an der Innenwand des Rohres, schneller und einfacher analysiert und beurteilt werden kann. Durch eine automatische Positionierung des Führungsmittels können weitere Abläufe automatisiert werden, wodurch die Untersuchung weiter beschleunigt wird.

Das Prüfen der Rohrinnenwand kann während eines Schweißvorganges des Rohres, insbesondere der Rohrinnenwand, stattfinden. Hierdurch kann in Echtzeit (Real-Time) und "online" der Schweißvorgang optisch untersucht bzw. beobachtet werden. Zudem können dadurch die Schweißparameter während des Schweißvorganges überwacht und entsprechend angepasst werden.

Bevorzugte Ausführungsformen ergeben sich aus den Unteransprüchen. Nachfolgend wird die Erfindung anhand von Ausführungsbeispielen unter Bezugnahme auf die beigefügten schematischen Zeichnungen näher erläutert. Hierbei zeigen
- Fig. 1: eine perspektivische Ansicht einer erfindungsgemäßen Ausführungsform der Führungsvorrichtung;
- Fig. 2: einen Querschnitt der Führungsvorrichtung gemäß Fig. 1, die im Gebrauch in einem Rohr angeordnet ist;
- Fig. 3: einen Querschnitt einer weiteren Ausführungsform der Führungsvorrichtung;
- Fig. 4: eine Draufsicht auf eine Ausführungsform der Führungsvorrichtung;
- Fig. 5A: eine Seitenansicht einer weiteren Ausführungsform der Führungsvorrichtung, die im Gebrauch in einem Rohr angeordnet ist;
- Fig. 5B: eine Vorderansicht der Führungsvorrichtung gemäß Fig. 5A; und
- Fig. 6: einen Querschnitt einer weiteren Ausführungsform der Führungsvorrichtung.

Bei der nachfolgenden Beschreibung werden für gleiche und gleich wirkende Teile dieselben Bezugsziffern verwendet.

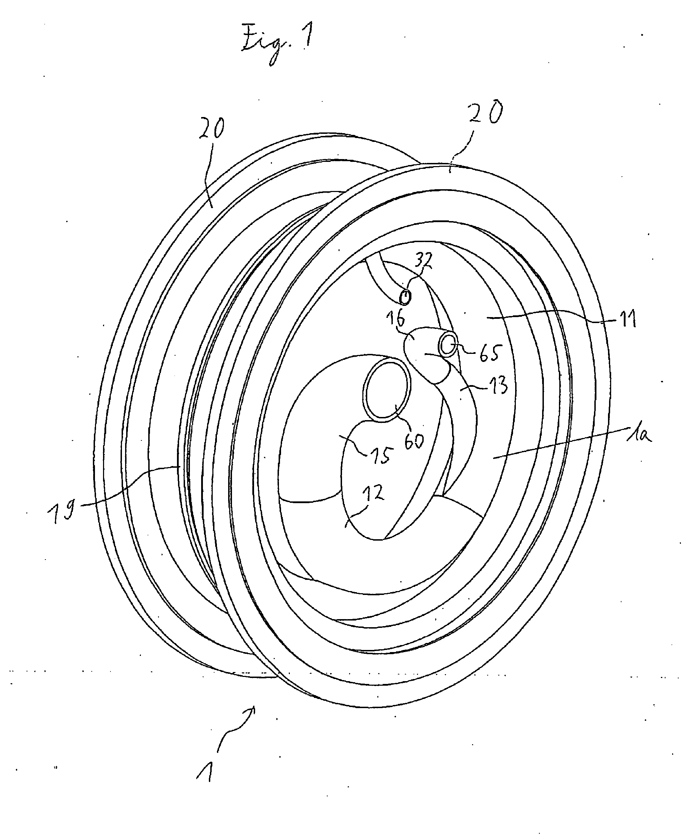

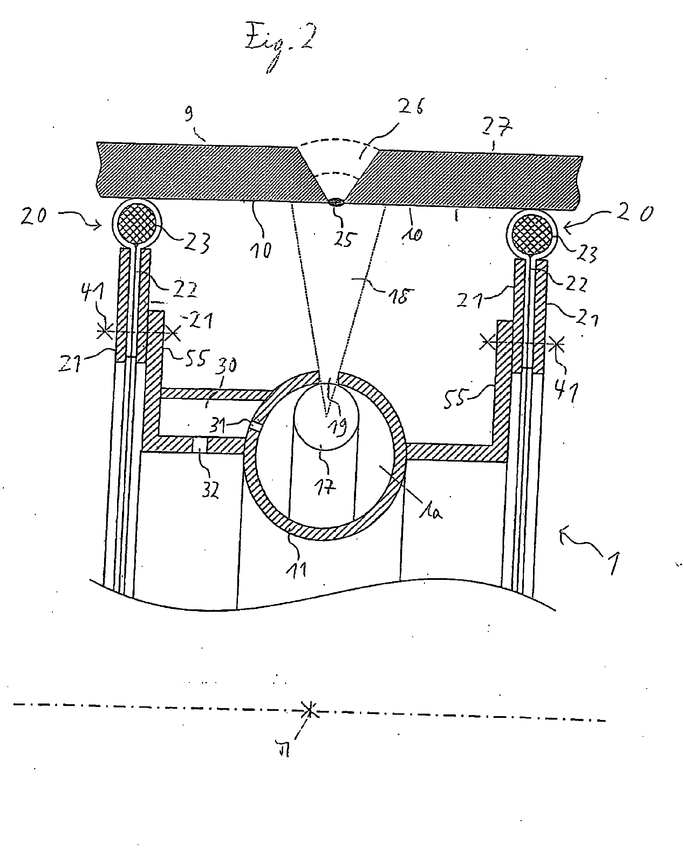

In Fig. 1 ist eine erfindungsgemäße Ausführungsform der Führungsvorrichtung gezeigt. Die Führungsvorrichtung ist zur Aufnahme einer Optikeinrichtung 17 vorgesehen und dient zur Prüfung von Schweißnähten von Rohren, insbesondere zur Prüfung der Wurzel von Schweißnähten an der Rohrinnenwand (siehe Fig. 2). Generell können auch andere Strukturen an einer Rohrinnenwand, wie Ablagerungen oder Beschädigungen, mit der Führungsvorrichtung untersucht werden. Anstelle von Rohren können andere Elemente mit einem Innenraum untersucht werden, beispielsweise Kessel oder Armaturen einer Prozessanlage.

Die Führungsvorrichtung wird sowohl ohne Optikeinrichtung (Fig. 1) als auch mit Optikeinrichtung 17 (Fig. 2) offenbart und beansprucht. Ferner wird die Führungsvorrichtung als Komponente einer Prüfvorrichtung offenbart und beansprucht, die ferner die Optikeinrichtung sowie eine Auswertungseinrichtung (nicht gezeigt) aufweist, die der Optikeinrichtung zugeordnet ist und beispielsweise einen Bildschirm zur Darstellung der Rohrinnenwand umfasst.

Wie in den Fig. 1 und 2 dargestellt, weist die Führungsvorrichtung ein Führungsmittel 1a auf, das im Gebrauch, d.h. im Prüfbetrieb, druckstarr im Rohr 9 angeordnet ist. Zur Veränderung der Ortslage der Optikeinrichtung 17 in Umfangsrichtung des Rohres 9 ist diese beweglich im Führungsmittel 1a angeordnet. Dazu weist das Führungsmittel 1a einen Hohlkörper 11 auf, der zur Aufnahme der Optikeinrichtung 17 angepasst ist. Die Form des Hohlkörpers 11 in Längsrichtung entspricht dem Innenprofil des zu prüfenden Elements, so dass die Optikeinrichtung 17 an der Innenfläche entlang geführt werden kann. Bei einem Rohr 9, wie in Fig. 1, 2 gezeigt, ist der Hohlkörper 11 gekrümmt, insbesondere kreisförmig gekrümmt derart, dass der Hohlkörper 11 konzentrisch im Rohr 9 angeordnet werden kann. Der Hohlkörper 11 bildet dabei einen Führungsring bzw. einen Hohlring 11a. Andere Längsgeometrien des Hohlkörpers 11 sind möglich.

Der Querschnitt des Hohlkörpers 11 ist kreisförmig, wobei andere Querschnittsgeometrien möglich sind. Der Hohlkörper 11 weist einen Sichtschlitz für die Optikeinrichtung 17 in der Form eines Längsspaltes 19 auf. Das Blickfeld bzw. der Sichtbereich der Optikeinrichtung 17 ist durch den Sichtschlitz begrenzt (Fig. 2). Der Längsspalt 19 ist auf einem Außenumfang des Hohlkörpers 11 bzw. des Führungsrings 11a ausgebildet. Konkret ist der Längsspalt 19 in einer imaginären Schnittebene angeordnet, die den in der Form eines Hohlrings ausgebildeten Hohlkörper 11 mittig in zwei Halbschalen teilt. Mit anderen Worten ist der Längsspalt 19 zentrisch bzw. punktsymmetrisch zum Mittelpunkt M des Hohlringes bzw. Hohlkörpers 11 angeordnet (Fig. 2). Diese Anordnung des Längsspaltes 19 hat den Vorteil, dass die Optikeinrichtung 17 einfach mit dem Sichtschlitz ausgerichtet werden kann. Es ist möglich, den Sichtschlitz exzentrisch anzuordnen, insbesondere wenn die Optikeinrichtung 17 durch Einbauten im Hohlkörper 11 zwangsgeführt ist. Bei dem Ausführungsbeispiel gemäß Fig. 2 ist der Hohlkörper einbautenfrei. Eine Führung der Optikeinrichtung 17 im Hohlkörper 11 ist nicht erforderlich aber auch nicht ausgeschlossen. Die Zentrierung der Optikeinrichtung 17 im Hohlkörper 11 erfolgt von selbst, da die Optikeinrichtung 17 an der Innenwandung des Hohlkörpers 11 anliegt und zwar im Bereich des Längsspaltes 11. Die Selbstzentrierung kann bspw. dadurch erreicht werden, dass die Optikeinrichtung 17 eine nach Außen wirkende Rückstellkraft im Hohlkörper 11 ausübt. Die Rückstellkraft kann durch eine Federwirkung der Optikeinrichtung 17 erreicht werden.

Der Längsspalt 19 erstreckt sich um den gesamten Hohlkörper, d.h. um 360°. Ein kleinerer Winkel ist möglich. Der Längsspalt 19 verläuft geradlinig auf dem Umfang des Hohlkörpers 11.

Die Spaltbreite des Längsspaltes 19 ist kleiner als die Breite bzw. der Durchmesser der Optikeinrichtung 17, so dass die Optikeinrichtung 17 im Hohlkörper 11 gehalten wird. Ferner bestimmt die Spaltbreite die Größe bzw. Breite des angestrebten Sichtfeldes.

Zum Einführen der Optikeinrichtung 17 in den Hohlkörper 11 weist diese eine erste Einführungsöffnung 60 auf, die tangential in den Hohlkörper 11, insbesondere am Innenumfang des Hohlkörpers 11, mündet. Die Einführungsöffnung 60 kann durch ein flexibles oder starres Einführungsrohr 15 parallel zur Achse des Rohres 9 verlängert werden.

Das Führungsmittel 1a umfasst ferner wenigstens ein Abstützmittel 55 zum Abstützen des Hohlkörpers 11 an der Rohrinnenwand. Das Abstützmittel 55 ist angepasst derart, dass der Längsspalt 19 im Gebrauch zur Innenwand 10 des Rohres 9 hin geöffnet ist und sich im Wesentlichen entlang der Innenwand 10 erstreckt. Dazu ragt das Abstützmittel 55 radial nach außen über den Hohlkörper 11 vor und verbindet diesen im Gebrauch mit der Innenwand 10 des Rohres 9.

Die Anordnung und Ausbildung des Längsspaltes 19 bewirkt, dass das durch den Längsspalt 19 geschaffene Sichtfeld tangential zur Innenwand 10 des Rohres 9 verläuft. Dies schafft die Voraussetzung dafür, dass eine Optikeinrichtung 17 mit einer dem Sichtfeld angepassten Blickrichtung, die im Hohlkörper geführt ist, die Innenwand 10 im Wesentlichen in tangentialer Richtung visuell abtastet und aufnimmt.

Die Optikeinrichtung kann eine (Video-)Kamera 17, ein Lichtleiter oder eine sonstige Einrichtung zur Übertragung von Bildinformationen sein. Die Optikeinrichtung kann beispielsweise eine Linse umfassen, die mit einem Lichtwellenleiter, z.B. Glasfasern, verbunden ist. Dadurch kann das umgelenkte Bild direkt betrachtet werden. Es ist auch möglich, dass die Optikeinrichtung einen Lichtwellenleiter umfasst. Ebenso vorstellbar ist eine Endoskop-Kamera und/oder eine CCD(Charge-Coupled-Device)-Kamera, die das erfasste Bild in elektronische Signale umwandelt, die am anderen Ende auf einem Monitor oder einer anderen Bilddarstellungsvorrichtung verarbeitet und als Bild dargestellt werden. Dadurch kann der Betrachter des Monitors oder der Bilddarstellungsvorrichtung auf einfache Art und Weise die Rohrinnenwand 10, insbesondere eine Schweißnaht 26 bzw. die Wurzel 25 einer Schweißnaht 26, optisch untersuchen. Vorzugsweise erfasst die Optikeinrichtung nicht nur den für das menschliche Auge sichtbaren Bereich der Strahlung, sondern kann Infrarot- und/oder UV-Strahlung optisch erfassen. Alternativ oder zusätzlich ist auch eine Aufnahme der erfassten Bilder auf ein Speichermedium, wie z.B. eine Festplatte, eine CD, eine DVD oder eine Speicherkarte, zum späteren (erneuten) Betrachten vorstellbar.

Die Kamera 17 ist mit einer Kameraleitung 70 verbunden, über die die erfassten Bilder übertragen werden. Vorstellbar ist auch eine drahtlose Übertragung der erfassten Bilder. Die Kameraleitung 70 ist derart flexibel, dass die Kameraleitung 70 der Form des Führungsrings 11 folgen kann. Andererseits ist die Kameraleitung 70 derart starr, dass die Kamera 17 einfach in den Hohlkörper eingeführt und darin durch Schieben und Ziehen an der Kameraleitung 70 bewegt werden kann.

Durch das erste Einführungsrohr 15 wird die Kamera 17 durch den Eintrittsbogen 12 in den Führungskörper 11 eingeführt. Das offene Ende des Einführungsrohrs 15 zeigt im Wesentlichen in axiale Richtung des Rohres 9. Ebenso ist eine spiralförmiges Einführungsrohr 15 vorstellbar. Durch ein zweites Einführungsrohr 16 wird ein Kamerazugseil 14 durch den Ein-/Austrittsbogen 13 in die Führungsvorrichtung eingeführt und mit der Kamera 17 verbunden. Das offene Ende des Einführungsrohrs 16 zeigt im Wesentlichen in axiale Richtung des Rohres 9. Ebenso ist ein spiralförmiges Einführungsrohr 16 vorstellbar. Durch Ziehen an diesem Kamerazugseil 14 kann die Position der Kamera 17 innerhalb der Führungsvorrichtung in Umfangsrichtung des Rohres 9 verändert werden. Das Kamerazugseil 14 ist vorzugsweise ein Stahl, Metallseil oder ein Kunststoffseil. Ebenso vorstellbar ist ein elastisches Seil. Die Führungsvorrichtung kann des Weiteren eine Einführungsöffnung 32 für ein Formiergas umfassen.

Fig. 2 zeigt einen Querschnitt einer Führungsvorrichtung in einem Rohr 9, in die eine Kamera 17 eingeführt ist. Die Führungsvorrichtung umfasst den vorstehend beschriebenen kreisförmigen Führungsring 11, in den die Kamera 17 eingeführt ist. Der Führungsring 11 kann als flexibler Führungsring 11 ausgebildet sein. Auch andere Form des Führungsringes 11, insbesondere ovale und ellipsenförmige Formen sind vorstellbar. Die Kamera 17 blickt durch den Sichtschlitz 19 des Führungsrings 11 auf die Innenwand 10 eines Rohres 9. Die maximale Breite des Sichtbereichs 18 der Kamera 17 wird durch die Größe des Sichtschlitzes 19 bestimmt. In den Sichtbereich 18 der Kamera fällt in Fig. 2 die Wurzel 25 der Schweißnaht 2 der Rohrinnenwand 10.

Die Führungsvorrichtung wird durch das Abstützmittel in der Form von Führungsstützen 55 geführt, die sich jeweils auf den beiden Seiten des Führungsringes 11 befinden. An den Führungsstützen 55 befinden sich Ringe zur Durchmesseranpassung 21, mit denen die Führungsvorrichtung auf unterschiedliche Durchmesser von Rohren angepasst werden kann. Hierdurch kann auch der Abstand zwischen Rohrinnenwand 10 und der Kamera 17 angepasst werden. Zwischen den Ringen zur Durchmesseranpassung 21 und der Rohrinnenwand 10 befindet sich jeweils eine Dichtung 20.

Die Ringe zur Durchmesseranpassung 21 sind miteinander und mit den Führungsstützen 55 durch die Verspannungselemente 41 verbunden.

Ebenfalls kann der Abstand zwischen Rohrinnenwand 10 und der Kamera 17 durch zusätzliche Metallringe oder Blechringe angepasst werden.

Die Verspannungselemente 41 umfassen vorzugsweise Schrauben, Bolzen oder ähnliches. Ebenso vorstellbar ist, dass die Verspannungselemente 41 Magnete umfassen. Die Verspannungselemente 41 sind vorzugsweise über den kreisförmigen Umfang der Ringe zur Durchmesseranpassung 21 gleichmäßig verteilt.

Die Führungsvorrichtung umfasst einen Verteilungsring 30 für ein Formiergas, der sich neben dem Führungsring 11 befindet. Der Verteilungsring 30 ist als ringförmiger Hohlkörper ausgebildet. Der Verteilungsring 30 weist vorzugsweise die gleiche bzw. eine ähnliche Form auf wie der Führungsring 11. Das Volumen des Verteilungsrings 30 ist ungefähr halb so groß wie das Volumen des Führungsrings 11. Das Volumen des Verteilungsrings 30 für das Formiergas kann auch genau so groß oder größer als das Volumen des Führungsrings 11 sein. Das Formiergas gelangt durch die Einführungsöffnung 32 in den Verteilungsring 30 und verlässt durch die Eintrittsöffnung 31 den Verteilungsring 30 und gelangt in den Führungsring 11 der Führungsvorrichtung. Dadurch ist der Führungsring 11 durch das Formiergas freispülbar. Von hier aus gelangt das Formiergas in den Hohlraum 27. Der Hohlraum 27 wird von der Rohrwand 10 und der Führungsvorrichtung begrenzt. Die Einführungsöffnung 32 für das Formiergas zeigt im Gebrauch in die axiale Richtung des Rohres 9. Die Öffnungsrichtung der Einführungsöffnung 32 für das Formiergas ist im Wesentlichen parallel zur Öffnungsrichtung der Einführungsöffnung 60 für die Kameraleitung 70 und im Wesentlichen parallel zur Öffnungsrichtung der Einführungsöffnung 65 für das Kamerazugseil. Die Öffnungsrichtungen der drei Einführungsöffnungen 32, 60, 65 können auch in jeweils unterschiedliche Richtungen zeigen.

Der Verteilungsring 30 kann mit einer Metallwolle oder einer Metalllegierungswolle, wie z.B. Stahlwolle, teilweise oder ganz gefüllt sind. Durch diese Füllung verbessert sich das Strömungsverhalten des Formiergases. Durch die Einleitung des Formiergases durch den Führungsring 11 kann der Führungsring 11 von anderen Gases und/oder Flüssigkeiten freigespült werden.

Die Blickrichtung 18 der Kamera 17 verläuft im Wesentlichen tangential zur Innenwand 10 des Rohres 9. Dies entspricht der typischen Blickrichtung einer die Schweißnaht 26 überprüfenden Person. Dadurch kann die Wurzel 25 der Schweißnaht 26 besser untersucht werden bzw. mehr Informationen gewonnen werden, beispielsweise ob die Wurzel 25 in das Rohr 9 hineinragt.

Im Wesentlichen tangential zur Rohrinnenwand 10 bedeutet, dass die Blickrichtung 18 der Kamera 17 bzw. das vom Längsspalt 19 begrenzte Sichtfeld im Wesentlichen in Umfangsrichtung des Rohres 9 verläuft. Die Blickrichtung 18 bildet somit mit der Rohrinnenwand 10 einen spitzen Winkel.

Während eines Schweißvorganges wird die Kamera 17 durch den Führungsring 11 vor zu großer Wärmestrahlung geschützt, da der Sichtschlitz 19, durch den Wärme eindringen kann, relativ klein ist. Daher kann die Schweißnaht 26 bzw. die Wurzel 25 der Schweißnaht 26, auch während eines Schweißvorganges mit der Kamera 17 beobachtet und untersucht werden. Die Überprüfung kann "online" bzw. in Echtzeit (Real-Time) durchgeführt werden.

Vorzugsweise wird die Kamera 17 zusätzlich gekühlt, um sie vor Überhitzung zu schützten, indem beispielsweise ein Kühlmittel durch die Kameraleitung 70 zu der Kamera 17 geleitet wird. Dadurch wird die Kameraleitung 70 ebenfalls gekühlt.

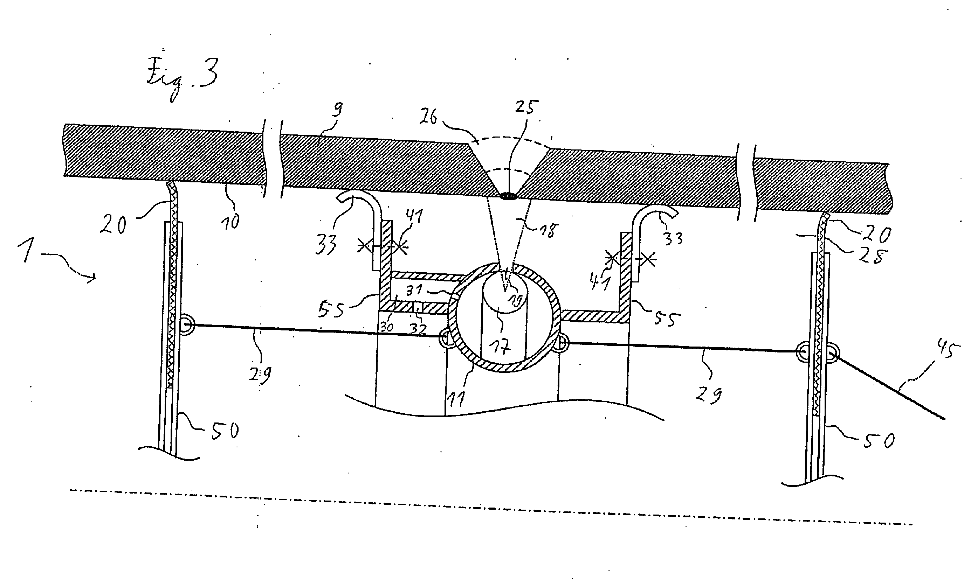

Fig. 3 zeigt eine weitere Ausführungsform einer Führungsvorrichtung, in die eine Kamera 17 eingeführt ist und die in einem Rohr 9 angeordnet ist. Die Führungsvorrichtung steht in Fig. 3 nicht durch Ringe zur Durchmesseranpassung 21 und Dichtungen 20 mit der Rohrinnenwand 10 in Kontakt, sondern die Führungsvorrichtung ist durch Gleitfüße 33 an der Rohrinnenwand 10 abgestützt. Die Gleitfüße 33 sind durch Verspannungselemente 41 mit den Führungsstützen 55 der Führungsvorrichtung verbunden. Die Gleitfüße 33 weisen eine gebogene Form auf, wobei der zu der Innenwand 10 des Rohres 9 zugewandte Teil der Gleitfüße 33 von dem Längsspalt 19 weg- und zu der Begrenzungswand 50 hingebogen ist. Der Führungsring 11 ist durch Verbindungsseile 29 mit den Begrenzungswänden 50 verbunden. Die Verbindungsseile 29 laufen im Gebrauch im Wesentlichen in Längsrichtung des Rohres 9. Die Begrenzungswände 50 haben einen Durchmesser der dem Durchmesser des Rohres 10 nahezu entspricht, so dass die Dichtungen 20 nur einen kleinen Bereich zwischen Begrenzungswand 50 und Rohrinnenwand 10 abdichten. Die Verbindungsseile 29 können Stahlseile, Metallseile, Kunststoffseile oder eine andere Art von Seilen oder Ketten sein. Zwischen den Begrenzungswänden 50 und der Rohrinnenwand 10 befinden sich Dichtungen 20. Die Dichtungen 20 der in Fig. 3 gezeigten Ausführungsform sind ringförmige Gummidichtungen. Die Gummidichtungen sind in der jeweiligen Begrenzungswand 50 eingespannt bzw. eingeklemmt. Auch andere Arten der Verbindung zwischen Gummidichtung und Begrenzungswand 50 sind vorstellbar. Die Dichtungen 20 entsprechen vorzugsweise den Dichtungen der Ausführungsform, die in Fig. 2 gezeigt ist.

Die Begrenzungswände 50 bilden zusammen mit der Innenwand 10 des Rohres 9 und den Dichtungen 20, die sich zwischen den Begrenzungswänden 50 und der Rohrinnenwand 10 befinden, einen Hohlraum 28. Der Hohlraum 28 umschließt die Schweißwurzel 25, den Führungsring 11 und die Führungsstützen 55 sowie die Gleitfüße 33. Der Hohlraum 28 kann als Formierkammer und/oder als Wärmestaukammer für die Vorwärmung und/oder Wärmenachbehandlung der Schweißnaht 26 bzw. der Wurzel 25 der Schweißnaht 26 fungieren. Eine der Begrenzungswände 50 ist mit einem Vorrichtungsführungsseil 45 verbunden. Das Vorrichtungsführungsseil 45 kann ein Stahlseil, ein Metallseil, ein Kunststoffseil oder ein andere Art von Seil oder Kette sein. Durch Ziehen am Vorrichtungsführungsseil oder Kette 45 kann die Längsposition der Führungsvorrichtung entlang des Rohres 9 verändert werden. Dadurch können verschiedene Stellen der Rohrinnenwand 10 durch die Kamera 17 untersucht werden. Auch bei dieser Ausführungsform der Führungsvorrichtung verläuft die Blickrichtung 18 der Kamera 17 im Wesentlichen tangential zur Innenwand 10 des Rohres 9.

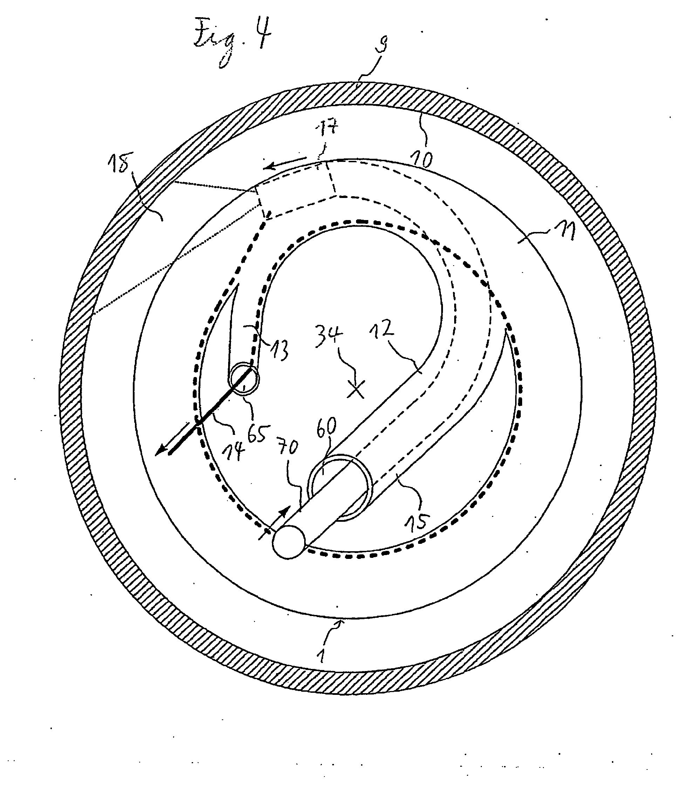

Fig. 4 zeigt eine schematische Ansicht einer Ausführungsform der erfindungsgemäßen Führungsvorrichtung. Die Führungsvorrichtung umfasst einen kreisförmigen Führungsring 11, in dem die Kamera 17 geführt wird. Die Kamera 17 ist mit einem Kamerazugseil oder Kette 14 verbunden, das einmal vollständig in dem Führungsring 11 umläuft und dann den Führungsring 11 durch den Ein-/Austrittsbogen 13 verlässt. Die Kamera 17 hat einen Sichtbereich 18, der im Wesentlichen tangential zur Innenwand 10 des Rohres 9, das eine Achse 34 aufweist, verläuft. Durch Ziehen am Kamerazugseil oder an der Kamerazugkette 14 kann die Kamera 17 in Umfangsrichtung des Rohres 9 bewegt werden, wodurch sich die Blickrichtung 18 ebenfalls entlang der Umfangsrichtung des Rohres 9 verändert. Die Kamera 17 ist durch das Einführungsrohr 15 in den Führungsring 11 eingeführt. Durch Ziehen oder Schieben an der Kameraleitung 70 kann die Kamera 17 in Umfangsrichtung des Rohres 9 bewegt werden und somit die Blickrichtung 18 ebenfalls entlang der Umfangsrichtung des Rohres 9 verändert werden. Das Kamerazugseil 14 verläuft in Fig. 4 im Führungsring 11 im Uhrzeigersinn. Die Kameraleitung 70 verläuft in Fig. 4 im Führungsring 11 entgegengesetzt zum Uhrzeigersinn. Vorstellbar ist auch, dass die Kameraleitung 70 und das Kamerazugseil 11 jeweils umgekehrt verlaufen, jedoch ebenfalls in entgegen gesetzte Richtungen zueinander. Durch Ziehen am Kamerazugseil oder an der Kamerazugkette 14 und an der Kameraleitung 70 bewegt sich die Kamera 17 in die zwei entgegen gesetzten Umfangsrichtungen des Führungsrohres 11. Die Kamera 17 befindet sich am äußeren Rand des Führungsrings 11 und bewegt sich beim Ziehen der Kameraleitung 70 an diesem Rand entlang.

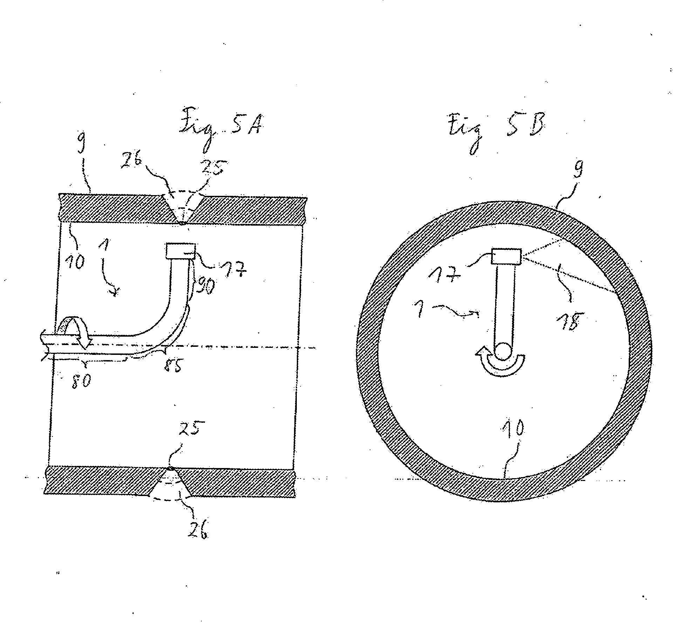

Fig. 5A zeigt eine weitere Ausführungsform einer erfindungsgemäßen Führungsvorrichtung. Die Führungsvorrichtung umfasst einen geraden ersten Teil 80, der in Axialrichtung des Rohres 9 verläuft. Daran anschließend ist ein kreisbogenförmiger Teil 85 angeschlossen. Wiederum daran anschließend ist ein gerader Endteil 90, der eine Öffnung umfasst. Eine Kamera 17 blickt durch diese Öffnung im Wesentlichen tangential zur Innenwand 10 des Rohres 9. Hierdurch kann die Rohrinnenwand 10 bzw. die Wurzel 25 der Schweißnaht 26 erfasst werden. Der Durchmesser der Führungsvorrichtung ist sehr viel kleiner als der Durchmesser des Rohres 9. Durch Drehen des geradlinigen Teils 80 in Umfangsrichtung des Rohres 9 dreht sich insbesondere der gerade Endteil 90 in Umfangsrichtung des Rohres 9. Dadurch können verschiedene Teile der Innenwand 10 des Rohres 9 untersucht werden. Durch Verändern der Position in Längsrichtung des Rohres 9 können verschiedene Stellen der Rohrinnenwand 10 entlang der Längsachse des Rohres 9 durch die Kamera 17 untersucht werden.

Fig. 5B zeigt eine Vorderansicht der Führungsvorrichtung gemäß Fig. 5A. Deutlich zu erkennen ist, dass die Blickrichtung 18 der Kamera 17 im Wesentlichen tangential zur Innenwand 10 des Rohres 9 verläuft und dass durch Drehen der Führungsvorrichtung in Umfangsrichtung des Rohres 9 sich das Blickfeld 18 der Kamera 17 in Umfangsrichtung des Rohres 9 über die Rohrinnenwand 10 bewegt.

Auch bei der in Fig. 5A und 5B gezeigten Ausführungsform ist anstelle der Kamera 17 jede andere Art von Optikeinrichtung vorstellbar, die in Zusammenhang mit der in Fig. 1 gezeigten Ausführungsform beschrieben wurde.

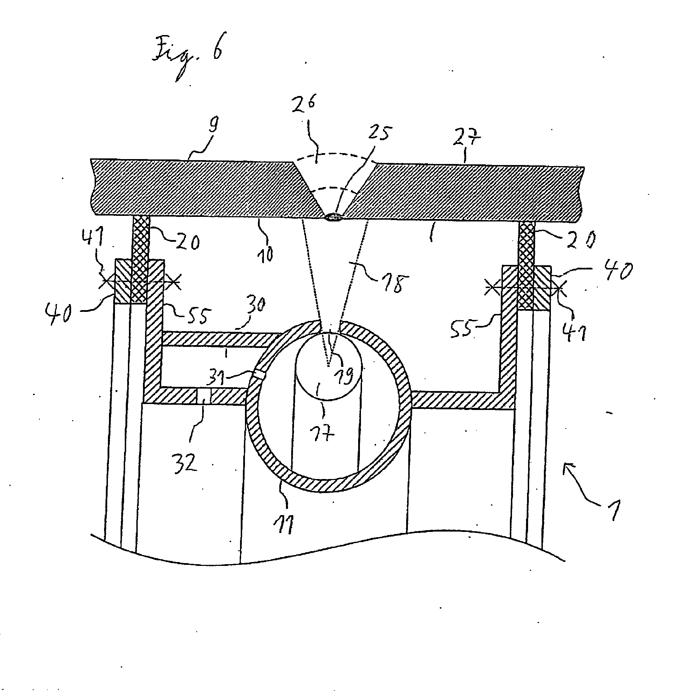

Fig. 6 zeigt einen Querschnitt einer Führungsvorrichtung, die im Wesentlichen der Führungsvorrichtung gemäß Fig. 2 entspricht. In Fig. 6 ist jedoch der Hohlraum 27 durch Dichtungen 20 abgedichtet, die Gummiringdichtungen umfassen, im Gegensatz zu den Dichtungen 20 in Fig. 2. Diese Gummiringdichtungen sind jeweils zwischen einem Metallring 40 auf der Außenseite des Hohlraumes und der Führungsstütze 55 mit Verspannungselementen 41 eingeklemmt bzw. verspannt.

Die Optikeinrichtung bzw. Kamera 70 kann mit einem Bildverarbeitungssystem verbunden sein. Das Bildverarbeitungssystem analysiert das aufgenommene Bild der Kamera 17 von der Rohrinnenwand 10. Auf Grundlage dieser Analyse, die beispielsweise das Bild auf Wärmestellen analysiert, kann beispielsweise die Führungsvorrichtung und die Optikeinrichtung derart gesteuert und positioniert werden, dass die Schweißstelle sich im Blickfeld bzw. in der Mitte des Blickfelds der Optikeinrichtung befindet. Weitere Arten der automatischen Bildanalyse wie beispielsweise das automatische Analysieren des Fortgangs des Schweißvorganges und/oder der Qualität der Schweißnaht bzw. der Wurzel der Schweißnaht sind vorstellbar. Das Bildverarbeitungssystem steuert vorzugsweise den Schweißvorgang selbst.

Die Führungsvorrichtung ermöglicht beim Schweißen das Beobachten der kompletten Wurzel mit und ohne Vorwärmung und mit oder ohne Formierung. Somit ermöglicht sie das Anpassen von Parametern, um eine optimale Wurzelausbildung zu erreichen.

Das Beurteilen der Wurzel jeweils während des Schweißens von Stütz- und Fülllagen vermeidet damit die Reparatur, die durch Zurückfallen oder Durchdrücken der Wurzel beim Schweißen der Stütz- und Fülllagen nötig wäre.

Die Beurteilung der Wurzel vor dem Schweißen der folgenden Stütz- und Fülllagen hat den Vorteil dass, wenn die Wurzel ausgebessert werden muss, dieses unmittelbar nach dem Schweißen der Wurzel erfolgt. Dann ist es nicht notwendig die Stütz- und Fülllagen für die Ausbesserung der Wurzel zu entfernen.

Die Führungsvorrichtung ermöglicht das Beurteilen der Wurzel nach der Wärmenachbehandlung und unterstützt die Beurteilung auf Grund von Anzeigen der zerstörungsfreien Werkstoffprüfung (Ultraschall- und/oder Durchstrahlungsprüfung) und damit die bessere Beurteilung der Anzeigen.

### Bezugszeichenliste

- 1: Führungsvorrichtung
- 1a: Führungsmittel
- 9: Rohr
- 10: Innenwand des Rohres
- 11: Hohlkörper (Führungsring)
- 12: Eintrittsbogen
- 13: Austrittsbogen
- 14: Kamerazugseil/Kamerazugkette
- 15: Einführungsrohr Kamera
- 16: Einführungsrohr Kamerazugseil/Kamerazugkette
- 17: Kamera (Optikeinrichtung)
- 18: Sichtbereich der Kamera
- 19: Sichtschlitz im Führungsring (Längsschlitz)
- 20: Dichtung
- 21: Ringe zur Durchmesseranpassung
- 22: Folie oder Tuch
- 23: Schnur oder Seil
- 25: Wurzel der Schweißnaht
- 26: Schweißnaht
- 27: Hohlraum
- 28: großer Hohlraum
- 29: Verbindungsseil/Verbindungskette Führungsvorrichtung-Begrenzungswand
- 30: Verteilungsring Formiergas
- 31: Eintrittsöffnung Formiergas
- 32: Einführungsöffnung Formiergas
- 33: Gleitfüße
- 34: Achse des Rohres
- 40: Metallring
- 41: Verspannungselemente
- 45: Vorrichtungsführungsseil/ Vorrichtungsführungskette
- 50: Begrenzungswand
- 55: Abstützmittel (Führungsstütze)
- 60: Einführungsöffnung Kamera
- 65: Einführungsöffnung Kamerazugseil
- 70: Kameraleitung
- 80: gerader erster Teil der Führungsvorrichtung
- 85: kreisbogenförmiger Teil der Führungsvorrichtung
- 90: gerader Endteil der Führungsvorrichtung

## Patentansprüche

1. Führungsvorrichtung mit einer Kamera oder einem Lichtleiter als eine Optikeinrichtung (17) zur Prüfung von Schweißnähten eines Rohres, umfassend ein Führungsmittel (1a), das einen als gekrümmtes Rohr ausgebildeten Hohlkörper (11) zur Aufnahme der Optikeinrichtung (17) mit einer ersten Einführungsöffnung (60) zum Einführen der Optikeinrichtung (17) in den Hohlkörper (11) bildet, und wenigstens ein Abstützmittel (55) zum Abstützen des Hohlkörpers (11) an einer Innenwand (10) des Rohres (9),
wobei ein Längsspalt (19) im Hohlkörper (11) ausgebildet und das wenigstens eine Abstützmittel (55) derart angepasst ist sowie die Optikeinrichtung (17) durch das Führungsmittel (1a) entlang des Längsspaltes (19) derart geführt ist, dass der Längsspalt (19) im Gebrauch zur Innenwand (10) des Rohres (9) hin geöffnet ist und sich entlang der Innenwand (10) des Rohres (9) derart erstreckt, dass ein durch den Längsspalt (19) begrenztes Sichtfeld bzw. eine Blickrichtung der Optikeinrichtung (17) im Gebrauch im Wesentlichen tangential zur Innenwand (10) des Rohres (9) verläuft.

2. Führungsvorrichtung nach Anspruch 1,
**gekennzeichnet durch**
ein mit dem Führungsmittel verbundenes Einführungsrohr (15) zum Einführen der Optikeinrichtung (17) in den Hohlkörper (11) **durch** die erste Einführungsöffnung (60).

3. Führungsvorrichtung nach Anspruch 1 oder 2,
**gekennzeichnet durch**
eine zweite in dem Hohlkörper (11) ausgebildete Einführungsöffnung (65) zum Einführen eines Optikeinrichtungszugseils oder einer Optikeinrichtungszugkette (14) in den Hohlkörper (11).

4. Führungsvorrichtung nach einem der vorhergehenden Ansprüche,
**dadurch gekennzeichnet, dass**
die Führungsvorrichtung zwei Abstützmittel (55) umfasst und der Hohlkörper (11) zwischen den beiden Abstützmitteln (55), insbesondere im Wesentlichen mittig zwischen den beiden Abstützmitteln (55), angeordnet ist.

5. Führungsvorrichtung nach einem der vorhergehenden Ansprüche,
**gekennzeichnet durch**
mindestens ein mit der Führungsvorrichtung verbindbares Vorrichtungsführungsseil oder eine mit der Führungsvorrichtung verbindbare Vorrichtungsführungskette (45) zum Beibehalten und/oder Verändern der Position der Führungsvorrichtung entlang der Längsachse des Rohrs (9).

6. Führungsvorrichtung nach Anspruch 4 oder 5,
**dadurch gekennzeichnet, dass**
die Abstützmittel (55) und der Hohlkörper (11) derart ausgebildet sind, dass die Abstützmittel (55), der Hohlkörper (11) und die Innenwand (10) des Rohres (9) im Gebrauch einen ersten Hohlraum (27) bilden.

7. Führungsvorrichtung nach einem der Ansprüche 1-6,
**gekennzeichnet durch**
zwei mit dem Hohlkörper (11) verbindbare Begrenzungswände (50), die in Längsrichtung des Rohres (9) vor und hinter dem Hohlkörper (11) angeordnet und derart ausgebildet sind, dass die Begrenzungswände (50) und das Rohr (9) im Gebrauch einen zweiten Hohlraum (28) bilden.

8. Führungsvorrichtung nach Anspruch 6 oder 7,
**dadurch gekennzeichnet, dass**
der Hohlraum (27, 28) eine Formierkammer zur Aufnahme eines Formiergases bildet.

9. Führungsvorrichtung nach Anspruch 8,
**dadurch gekennzeichnet, dass**
die Führungsvorrichtung eine mit Metallwolle oder Metalllegierungswolle, insbesondere Stahlwolle, gefüllte Strömungskammer (30) zum Einleiten des Formiergases umfasst, die mit der Formierkammer fluidverbunden ist.

10. Führungsvorrichtung zur Führung einer Kamera oder eines Lichtleiters als eine Optikeinrichtung (17) in einem Rohr (9) umfassend die Kamera (17) oder den Lichtleiter, ein Führungsmittel mit einem geraden Längsteil (80), das sich im Gebrauch in Axialrichtung, insbesondere entlang der Mittellinie, des Rohres (9) erstreckt, einem daran anschließenden kreisbogenförmigen Mittelteil (85) und einem daran anschließenden geraden Endteil (90), das sich im Gebrauch in Radialrichtung des Rohres (9) erstreckt, wobei das Endteil (90) eine Öffnung aufweist, die im Gebrauch einer Innenwand (10) des Rohres (9) gegenüber angeordnet ist derart, dass ein Sichtfeld bzw. eine Blickrichtung der Optikeinrichtung (17) im Gebrauch im Wesentlichen tangential zur Innenwand (10) des Rohres (9) verläuft.

11. Führungsvorrichtung nach Anspruch 10,
**dadurch gekennzeichnet, dass**
das Führungsmittel um eine Achse drehbar angeordnet ist, die koaxial zur Längsachse des geraden Längsteils (80) verläuft.

12. Anordnung zum Untersuchen einer Schweißnaht (26) eines Rohres (9) umfassend eine Führungsvorrichtung nach einem der Ansprüche 1-11 und ein Rohr (9), in dem die Führungsvorrichtung angeordnet ist.

13. Prüfvorrichtung zur Prüfung von Schweißnähten eines Rohres mit einer Führungsvorrichtung nach einem der Ansprüche 1 bis 11 und einer Auswertungseinrichtung, die mit der Optikeinrichtung (17) verbunden oder verbindbar ist.

14. Verfahren zur optischen Untersuchung der Innenwand (10) eines Rohres (9), insbesondere der Wurzel (26) einer Schweißnaht (25) im Bereich der Innenwand (10) des Rohres (9), wobei
- eine Kamera oder ein Lichtleiter als eine Optikeinrichtung (17) in ein Führungsmittel, das einen als gekrümmtes Rohr ausgebildeten Hohlkörper (11) zur Aufnahme der Optikeinrichtung (17) bildet, durch eine erste Einführungsöffnung (60) eingeführt wird,
- das Führungsmittel in einem Rohr (9) angeordnet und durch Abstützmittel (55) gehalten wird derart, dass ein im Hohlkörper (11) ausgebildeter Längsspalt (19) zur Innenwand (10) des Rohres (9) hin geöffnet ist,
- die Optikeinrichtung (17) im Hohlkörper (11) entlang des Längsspaltes (19) geführt wird derart, dass eine Blickrichtung (18) der Optikeinrichtung (17) durch den Längsspalt (19) im Wesentlichen tangential zur Innenwand (10) des Rohres (9) verläuft, und
- die Innenwand (10) des Rohres (9), insbesondere die Schweißnaht (25), geprüft wird.

15. Verfahren zur optischen Untersuchung der Innenwand (10) eines Rohres (9), insbesondere der Wurzel (26) einer Schweißnaht (25) im Bereich der Innenwand (10) des Rohres (9), wobei
- eine Kamera oder ein Lichtleiter als eine Optikeinrichtung (17) in ein Führungsmittel eingeführt wird, das einen Hohlkörper (11) zur Aufnahme der Optikeinrichtung bildet mit einem geraden Längsteil, das im Gebrauch in Axialrichtung des Rohres (9) verläuft, einem daran anschließenden kreisbogenförmigen Mittelteil (85) und einem wiederum daran anschließenden geraden Endteil (90) mit einer Öffnung, das sich im Gebrauch in einer Radialrichtung des Rohres (9) erstreckt,
- das Führungsmittel in einem Rohr (9) angeordnet wird derart, dass eine Blickrichtung (18) der Optikeinrichtung (17) durch die Öffnung im Wesentlichen tangential zur Innenwand (10) des Rohres (9) verläuft, und
- die Innenwand (10) des Rohres (9), insbesondere die Schweißnaht (25), geprüft wird.

16. Verfahren nach Anspruch 14 oder 15, wobei die Blickrichtung (18) der Optikeinrichtung (17) in Umfangsrichtung des Rohres (9) verändert wird.

17. Verfahren nach einem der Ansprüche 14-16, wobei eine Position des Führungsmittels in Längsrichtung des Rohres (9) verändert wird.

18. Verfahren nach einem der Ansprüche 14-17, wobei das Führungsmittel auf einen Innendurchmesser des Rohres (9) angepasst wird.

19. Verfahren nach einem der Ansprüche 14-18, wobei die Optikeinrichtung (17) gekühlt wird.

20. Verfahren nach einem der Ansprüche 14-19, wobei ein von der Optikeinrichtung (17) erfasstes Bild automatisch analysiert wird, insbesondere zum automatischen Positionieren des Führungsmittels in dem Rohr (9).

21. Verfahren nach einem der Ansprüche 14-20, wobei das Prüfen der Rohrinnenwand (10) während eines Schweißvorganges des Rohres (9), insbesondere der Rohrinnenwand (10), stattfindet.

## Claims

1. Guiding device comprising a camera or an optical fibre as an optical system (17) for testing welded seams of a pipe, comprising a guiding means (1a) which forms a hollow body (11) constructed as a curved tube to accommodate the optical system (17), having a first insertion opening (60) for the insertion of the optical system (17) into the hollow body (11), and at least one supporting means (55) for supporting the hollow body (11) on an interior wall (10) of the pipe (9),
a longitudinal gap (19) being formed in the hollow body (11), and the at least one supporting means (55) being adapted in such a way and the optical system (17) being guided along the longitudinal gap (19) by the guiding means (1a) in such a way that the longitudinal gap (19) is open towards the interior wall (10) of the pipe (9) when in use and extends along the interior wall (10) of the pipe (9) in such a way that a field of view or viewing direction limited by the longitudinal gap (19) runs substantially tangentially with respect to the interior wall (10) of the pipe (9) when in use.

2. Guiding device according to Claim 1,
**characterized by**
an insertion tube (15) connected to the guiding means for the insertion of the optical system (17) into the hollow body (11) through the first insertion opening (60).

3. Guiding device according to Claim 1 or 2,
**characterized by**
a second insertion opening (65) formed in the hollow body (11) for the insertion of an optical system pulling cord or an optical system pulling chain (14) into the hollow body (11).

4. Guiding device according to one of the preceding claims,
**characterized in that**
the guiding device comprises two supporting means (55) and the hollow body (11) is arranged between the two supporting means (55), in particular substantially centrally between the two supporting means (55).

5. Guiding device according to one of the preceding claims,
**characterized by**
at least one device guiding cord that can be connected to the guiding device or a device guiding chain (45) that can be connected to the guiding device to maintain and/or vary the position of the guiding device along the longitudinal axis of the pipe (9).

6. Guiding device according to Claim 4 or 5,
**characterized in that**
the supporting means (55) and the hollow body (11) are formed in such a way that the supporting means (55), the hollow body (11) and the interior wall (10) of the pipe (9) form a first hollow chamber (27) when in use.

7. Guiding device according to one of Claims 1-6,
**characterized by**
two boundary walls (50) which can be connected to the hollow body (11), which are arranged in front of and behind the hollow body (11) in the longitudinal direction of the pipe (9) and which are formed in such a way that the boundary walls (50) and the pipe (9) form a second hollow chamber (28) when in use.

8. Guiding device according to Claim 6 or 7,
**characterized in that**
the hollow chamber (27, 28) forms a forming chamber to accommodate a forming gas.

9. Guiding device according to Claim 8,
**characterized in that**
the guiding device comprises a flow chamber (30) which is filled with metal wool or metal alloy wool, in particular steel wool, for introducing the forming gas and which has a fluid connection to the forming chamber.

10. Guiding device for guiding a camera or an optical fibre as an optical system (17) in a pipe (9), comprising the camera (17) or the optical fibre, a guiding means having a straight longitudinal part (80), which extends in the axial direction, in particular along the centre line, of the pipe (9) when in use, a middle part (85) in the shape of a circular arc following thereon, and a straight end part (90) following the latter, which extends in the radial direction of the pipe (9) when in use, the end part (90) having an opening which is arranged opposite an interior wall (10) of the pipe (9) when in use, in such a way that a field of view or viewing direction of the optical system (17) runs substantially tangentially with respect to the interior wall (10) of the pipe (9) when in use.

11. Guiding device according to Claim 10,
**characterized in that**
the guiding means is arranged such that it can be rotated about an axis which runs coaxially with respect to the longitudinal axis of the straight longitudinal part (80).

12. Arrangement for investigating a welded seam (26) of a pipe (9), comprising a guiding device according to one of Claims 1-11 and a pipe (9) in which the guiding device is arranged.

13. Testing device for testing welded seams of a pipe, comprising a guiding device according to one of Claims 1 to 11 and an evaluation apparatus which is or can be connected to the optical system (17).

14. Method for the optical investigation of the interior wall (10) of a pipe (9), in particular the root (26) of a welded seam (25) in the area of the interior wall (10) of the pipe (9),
- a camera or an optical fibre as an optical system (17) being introduced through a first insertion opening (60) into a guiding means, which forms a hollow body (11) formed as a curved tube to accommodate the optical system (17),
- the guiding means being arranged in a pipe (9) and held by supporting means (55) in such a way that a longitudinal gap (19) formed in the hollow body (11) is open towards the interior wall (10) of the pipe (9),
- the optical system (17) being guided along the longitudinal gap (19) in the hollow body (11) in such a way that a viewing direction (18) of the optical system (17) runs through the longitudinal gap (19) substantially tangentially with respect to the interior wall (10) of the pipe (9), and
- the interior wall (10) of the pipe (9), in particular the welded seam (25), is tested.

15. Method for the optical investigation of the interior wall (10) of a pipe (9), in particular the root (26) of a welded seam (25) in the area of the interior wall (10) of the pipe (9),
- a camera or an optical fibre as an optical system (17) being introduced into a guiding means, which forms a hollow body (11) to accommodate the optical system, having a straight longitudinal part which runs in the axial direction of the pipe (9) when in use, a middle part (85) in the shape of a circular arc following thereon, and a straight end part (90) in turn following the latter and having an opening which extends in a radial direction of the pipe (9) when in use,
- the guiding means being arranged in a pipe (9) in such a way that a viewing direction (18) of the optical system (17) through the opening runs substantially tangentially with respect to the interior wall (10) of the pipe (9), and
- the interior wall (10) of the pipe (9), in particular the welded seam (25), is tested.

16. Method according to Claim 14 or 15, the viewing direction (18) of the optical system (17) being varied in the circumferential direction of the pipe (9).

17. Method according to one of Claims 14-16, a position of the guiding means being varied in the longitudinal direction of the pipe (9).

18. Method according to one of Claims 14-17, the guiding means being adapted to an internal diameter of the pipe (9).

19. Method according to one of Claims 14-18, the optical system (17) being cooled.

20. Method according to one of Claims 14-19, an image recorded by the optical system (17) being analysed automatically, in particular for the automatic positioning of the guiding means in the pipe (9).

21. Method according to one of Claims 14-20, the testing of the pipe interior wall (10) taking place during a welding operation of the pipe (9), in particular of the pipe interior wall (10).

## Revendications

1. Dispositif de guidage comportant une caméra ou un guide d'ondes optique en tant que dispositif optique (17) destiné à examiner des soudures d'un tube, comprenant un moyen de guidage (1a) qui forme un corps creux (11) réalisé sous la forme d'un tube courbé pour recevoir le dispositif optique (17), comportant une première ouverture d'insertion (60) pour insérer le dispositif optique (17) dans le corps creux (11), et au moins un moyen de support (55) pour supporter le corps creux (11) sur une paroi intérieure (10) du tube (9), dans lequel une fente longitudinale (19) est formée dans le corps creux (11) et l'au moins un moyen de support (55) est ajusté et le dispositif optique (17) est guidé par le moyen de guidage (1a) le long de la fente longitudinale (19) de telle manière que la fente longitudinale (19), lors de l'utilisation, s'ouvre dans la paroi intérieure (10) du tube (9) et s'étende le long de la paroi intérieure (10) du tube (9) de telle manière qu'un champ de vue ou qu'une direction de regard du dispositif optique (17) délimitée par la fente longitudinale (19), lors de l'utilisation, soit orientée sensiblement tangentiellement à la paroi intérieure (10) du tube (9).

2. Dispositif de guidage selon la revendication 1, **caractérisé par** un tube d'insertion (15) relié au moyen de guidage pour insérer le dispositif optique (17) dans le corps creux (11) à travers la première ouverture d'insertion (60).

3. Dispositif de guidage selon la revendication 1 ou 2, **caractérisé par** une seconde ouverture d'insertion (65) formée dans le corps creux (11) pour insérer un câble de traction de dispositif optique ou une chaîne de traction de dispositif optique (14) dans le corps creux (11).

4. Dispositif de guidage selon l'une quelconque des revendications précédentes, **caractérisé en ce que** le dispositif de guidage comprend deux moyens de support (55) et **en ce que** le corps creux (11) est disposé entre les deux moyens de support (55), notamment sensiblement au milieu entre les deux moyens de support (55).

5. Dispositif de guidage selon l'une quelconque des revendications précédentes, **caractérisé par** au moins un câble de guidage de dispositif pouvant être relié au dispositif de guidage ou par au moins une chaîne de guidage de dispositif pouvant être reliée au dispositif de guidage (45) pour maintenir et/ou modifier la position du dispositif de guidage le long de l'axe longitudinal du tube (9).

6. Dispositif de guidage selon la revendication 4 ou 5, **caractérisé en ce que** les moyens de support (55) et le corps creux (11) sont conçus de telle manière que les moyens de support (55), le corps creux (11) et la paroi intérieure (10) du tube (9) forment, lors de l'utilisation, une première cavité (27).

7. Dispositif de guidage selon l'une quelconque des revendications 1-6, **caractérisé par** deux cloisons (50) pouvant être reliées au corps creux (11), qui sont disposées dans la direction longitudinale du tube (9) à l' avant et à l' arrière du corps creux (11) et qui sont conçues de telle manière que les cloisons (50) et le tube (9) forment, lors de l'utilisation, une seconde cavité (28).

8. Dispositif de guidage selon la revendication 6 ou 7, **caractérisé en ce que** la cavité (27, 28) forme une chambre de formage destinée à recevoir un gaz de formage.

9. Dispositif de guidage selon la revendication 8, **caractérisé en ce que** le dispositif de guidage comprend une chambre d'écoulement (30) remplie de laine de métal ou de laine d'alliage métallique, notamment de laine d'acier, pour l'introduction du gaz de formage, laquelle chambre d'écoulement est reliée par communication de fluide à la chambre de formage.

10. Dispositif de guidage destiné à guider une caméra ou un guide d'ondes optique en tant que dispositif optique (17) dans un tube (9) comprenant la caméra (17) ou le guide d'ondes optique, un moyen de guidage comportant une partie longitudinale droite (80) qui, lors de l'utilisation, s'étend dans la direction axiale, notamment le long de la ligne médiane du tube (9), une partie médiane en forme d'arc de cercle (85) pouvant être reliée à celle-ci et une partie d'extrémité droite (90) pouvant être reliée à celle-ci, laquelle partie d'extrémité s'étend, lors de l'utilisation, dans la direction radiale du tube (9), dans lequel la partie d'extrémité (90) présente une ouverture qui est agencée, lors de l'utilisation, de manière opposée à une paroi intérieure (10) du tube (9) de telle manière qu'un champ de vue ou qu'une direction de regard du dispositif optique (17), lors de l'utilisation, s'étende sensiblement tangentiellement à la paroi intérieure (10) du tube (9).

11. Dispositif de guidage selon la revendication 10, **caractérisé en ce que** le moyen de guidage est disposé de manière à pouvoir tourner autour d'un axe qui est coaxial à l'axe longitudinal de la partie longitudinale droite (80).

12. Dispositif destiné à inspecter une soudure (26) d'un tube (9) comprenant un dispositif de guidage selon l'une quelconque des revendications 1-11 et un tube (9) dans lequel est disposé le dispositif de guidage.

13. Dispositif de test destiné à tester des soudures d'un tube, comportant un dispositif guidage selon l'une quelconque des revendications 1 à 11 et un dispositif d'évaluation qui est relié ou peut être relié au dispositif optique (17).

14. Procédé destiné à inspecter optiquement la paroi intérieure (10) d'un tube (9), notamment la racine (26) d'une soudure (25) dans la région de la paroi intérieure (10) du tube (9), dans lequel
- une caméra ou un guide d'ondes optique est inséré en tant que dispositif optique (17) dans un moyen de guidage qui forme un corps creux (11) réalisé sous la forme d'un tube courbé pour recevoir le dispositif optique (17), à travers une première ouverture d'insertion (60),
- le moyen de guidage est disposé dans un tube (9) et est maintenu par des moyens de support (55) de manière à ce qu'une fente longitudinale (19) réalisée dans le corps creux (11) s'ouvre dans la paroi intérieure (10) du tube (9),
- le dispositif optique (17) est guidé dans le corps creux (11) le long de la fente longitudinale (19) de manière à ce qu'une direction de regard (18) du dispositif optique (17) s'étende à travers la fente longitudinale (19) de manière sensiblement tangentielle à la paroi intérieure (10) du tube (9), et
- la paroi intérieure (10) du tube (9), notamment la soudure (25), est inspectée.

15. Procédé d'inspection optique de la paroi intérieure (10) d'un tube (9), notamment de la racine (26) d'une soudure (25) dans la région de la paroi intérieure (10) du tube (9), dans lequel
- une caméra ou un guide d'ondes optique est inséré en tant que dispositif optique (17) dans un moyen de guidage qui forme un corps creux (11) pour recevoir le dispositif optique comportant une partie longitudinale droite qui s'étend, lors de l'utilisation, dans la direction axiale du tube (9), une partie médiane en forme d'arc de cercle (85) pouvant être reliée à celle-ci et une partie d'extrémité droite (90) pouvant à son tour être reliée à celle-ci, comportant une ouverture qui s'étend, lors de l'utilisation, dans une direction radiale du tube (9),
- le moyen guidage est disposé dans le tube (9) de manière à ce qu'une direction de regard (18) du dispositif optique (17) passe à travers l'ouverture de manière sensiblement tangentielle à la paroi intérieure (10) du tube (9), et
- la paroi intérieure (10) du tube (9), notamment la soudure (25), est inspectée.

16. Procédé selon la revendication 14 ou 15, dans lequel la direction de regard (18) du dispositif optique (17) est modifiée dans la direction circonférentielle du tube (9).

17. Procédé selon l'une quelconque des revendications 14-15, dans lequel une position du moyen de guidage est modifiée dans la direction longitudinale du tube (9).

18. Procédé selon l'une quelconque des revendications 14-17, dans lequel le moyen de guidage est ajusté à un diamètre intérieur du tube (9).

19. Procédé selon l'une quelconque des revendications 14-18, dans lequel le dispositif optique (17) est refroidi.

20. Procédé selon l'une quelconque des revendications 14-19, dans lequel une image acquise par le dispositif optique (17) est automatiquement analysée, notamment pour le positionnement automatique du moyen de guidage dans le tube (9).

21. Procédé selon l'une quelconque des revendications 14-20, dans lequel l'inspection de la paroi intérieure du tube (10) s'effectue pendant un processus de soudage du tube (9), notamment de la paroi intérieure (10) du tube.
